# EUROPÄISCHE PATENTANMELDUNG

(11) **EP 1 292 087 A1**
(43) Veröffentlichungstag der Anmeldung: **12.03.2003**
(21) Anmeldenummer: 01250317.3
(22) Anmeldetag: 05.09.2001
(51) Int. Cl.: H04M 3/42

(54) **Verfahren zur anonymisierten Kommunikation und zur Adressierung eines anonymisierten Kommunikationsendgerätes**

(71) Anmelder: Siemens Transit Telematic Systems AG, 9552 Bronschhofen (CH)
(72) Erfinder: Hildebrandt, Manfred, DE-13187 Berlin (DE); Hildebrandt, Manfred, DE-13187 Berlin (DE)
(74) Vertreter: Fischer, Michael, Dr.

(57) **Zusammenfassung**

Die Erfindung betrifft ein Verfahren zur anonymisierten Kommunikation mit einem Kommunikationsendgerät eines Telekommunikationsnetzes. Um auf einfache Art und Weise Kommunikationen mit dem Kommunikationsendgerät durchzuführen und kennzeichnende Daten des Kommunikationsendgerätes vor Bekanntwerden zu schützen, wird in einer mit dem Telekommunikationsnetz verbundenen Zuordnungseinheit eine Zuordnung von einem telekommunikationsnetzseitig festgesetzten Kennzeichen des Kommunikationsendgerätes zu einer anonymen Kennung vorgenommen, eine von dem Kommunikationsendgerät zu einem Ziel-Kommunikationsendgerät ausgesandte Zielnachricht, welche als Absenderinformation das Kennzeichen enthält, zunächst zu der Zuordnungseinheit geleitet, von der Zuordnungseinheit das Kennzeichen der Zielnachricht durch die Kennung ersetzt und danach die anonymisierte Zielnachricht zu dem Ziel-Kommunikationsendgerät weitergeleitet.

Weiterhin betrifft die Erfindung ein Verfahren zur Adressierung eines anonymisierten Kommunikationsendgerätes.

## Beschreibung

Verfahren zur anonymisierten Kommunikation und zur Adressierung eines anonymisierten Kommunikationsendgerätes

Die Erfindung betrifft ein Verfahren zur anonymisierten Kommunikation mit einem Kommunikationsendgerät eines Telekommunikationsnetzes.

Es ist allgemein bekannt, mit Hilfe von Kommunikationsendgeräten (z.B. Mobiltelefonen) eines (z.B. nach dem GSM-Standard (GSM = Global System for Mobile Communication) oder nach dem UMTS-Standard (UMTS = Universal Mobile Telecommunication System) arbeitenden) Telekommunikationsnetzes Kommunikationsverbindungen zwischen Kommunikationspartnern aufzubauen und durchzuführen. Derartige Kommunikationen werden z.B. im Zusammenhang mit elektronischem Handel (E-Commerce) oder mit Mobiltelefon-basiertem Handel (M-Commerce) verwendet. Dabei können von Kommunikations-Teilnehmern die Kommunikation betreffende Informationen oder Daten erfasst und zusammen mit kennzeichnenden Daten der Kommunikationsendgeräte der jeweils weiteren Teilnehmer abgespeichert werden. Dies wird von den weiteren Teilnehmern beispielsweise aus Datenschutzgründen oftmals kritisch betrachtet.

Der Erfindung liegt die Aufgabe zugrunde, Verfahren anzugeben, mit denen auf einfache Art und Weise Kommunikationen mit einem Kommunikationsendgerät durchgeführt werden können, wobei kennzeichnende Daten des Kommunikationsendgerätes vor einem unerwünschten Bekanntwerden geschützt werden.

Diese Aufgabe wird bei einem Verfahren der eingangs angegebenen Art erfindungsgemäß dadurch gelöst, dass in einer mit dem Telekommunikationsnetz verbundenen Zuordnungseinheit eine Zuordnung von einem telekommunikationsnetzseitig festgesetzten Kennzeichen des Kommunikationsendgerätes zu einer anonymen Kennung vorgenommen wird, eine von dem Kommunikationsendgerät zu einem Ziel-Kommunikationsendgerät ausgesandte Zielnachricht, welche als Absenderinformation das Kennzeichen enthält, zunächst zu der Zuordnungseinheit geleitet wird, von der Zuordnungseinheit das Kennzeichen der Zielnachricht durch die Kennung ersetzt wird und
danach die anonymisierte Zielnachricht zu dem Ziel-Kommunikationsendgerät weitergeleitet wird. Hierbei ist insbesondere vorteilhaft, dass das telekommunikationsnetzseitig festgesetzte Kennzeichen des Kommunikationsendgerätes lediglich der Zuordnungseinheit, nicht jedoch dem Zielkommunikationsendgerät bekannt wird. Dadurch wird verhindert, dass von dem Zielkommunikationsendgerät anhand des Kennzeichens das Kommunikationsendgerät erkannt werden kann und beispielsweise Kommunikationsinformationen diesem Kommunikationsendgerät zugeordnet und abgespeichert werden können.

Das erfindungsgemäße Verfahren kann derart ausgestaltet sein, dass von der Zuordnungseinheit eine dem Kennzeichen und der Kennung zugehörige Gültigkeitsdauer ermittelt wird, und das Ersetzen des Kennzeichens durch die Kennung nach Ablauf der Gültigkeitsdauer unterbunden wird. Vorteilhafterweise wird hierbei das Ersetzen des Kennzeichens durch die Kennung nur innerhalb der Gültigkeitsdauer vorgenommen. Dadurch wird die Nutzung der Kennung zeitlich beschränkt und es kann beispielsweise eine zeitbezogene Bezahlung der Kennungsbenutzung durchgeführt werden.

Die obengenannte Aufgabe wird ebenfalls erfindungsgemäß gelöst durch ein Verfahren zur Adressierung eines anonymisierten Kommunikationsendgerätes eines Telekommunikationsnetzes, bei dem in einer mit dem Telekommunikationsnetz verbundenen Zuordnungseinheit eine Zuordnung von einem telekommunikationsnetzseitig festgesetzten Kennzeichen des Kommunikationsendgerätes zu einer anonymen Kennung (UPID) vorgenommen wird, eine von einem Ruf-Kommunikationsendgerät zu dem Kommunikationsendgerät ausgesandte Rufnachricht, welche als Adressinformation die Kennung enthält, zunächst zu der Zuordnungseinheit geleitet wird, von der Zuordnungseinheit die Kennung der Rufnachricht durch das Kennzeichen ersetzt wird und danach die veränderte Rufnachricht zu dem dem Kennzeichen zugehörigen Kommunikationsendgerät weitergeleitet wird. Hierbei ist insbesondere vorteilhaft, dass von dem Ruf-Kommunikationsendgerät das Kommunikationsendgerät auch dann adressiert (und damit angesprochen) werden kann, wenn dem Ruf-Kommunikationsendgerät nur die anonyme Kennung des Kommunikationsendgerätes bekannt ist. Aus der anonymen Kennung kann das Ruf-Kommunikationsendgerät keine Rückschlüsse auf das Kommunikationsendgerät ziehen, es ist jedoch in der Lage, mit Hilfe der anonymen Kennung beispielsweise eine Abrechnung von für das Kommunikationsendgerät erbrachten Leistung durchzuführen.

Dieses Verfahren zur Adressierung kann so durchgeführt werden, dass von der Zuordnungseinheit eine dem Kennzeichen und der Kennung zugehörige Gültigkeitsdauer ermittelt wird, und das Ersetzen der Kennung durch das Kennzeichen nach Ablauf der Gültigkeitsdauer unterbunden wird. Damit kann vorteilhafterweise erreicht werden, dass das Kommunikationsendgerät nur während der Gültigkeitsdauer von dem Ruf-Kommunikationsendgerät adressiert (und somit angesprochen bzw. angerufen) werden kann.

Die erfindungsgemäßen Verfahren können so gestaltet sein, dass vor der Zuordnung von der Zuordnungseinheit die Kennung und ein der Kennung zugehöriges Sicherheitsmerkmal erstellt werden, die Kennung und das Sicherheitsmerkmal zu dem Kommunikationsendgerät übertragen werden, zur Zuordnung von dem Kommunikationsendgerät eine die Kennung und das Sicherheitsmerkmal enthaltende Zuordnungsnachricht an die Zuordnungseinheit übertragen wird, von der Zuordnungseinheit überprüft wird, ob das Sicherheitsmerkmal der Kennung zugehörig ist, bei einem positiven Überprüfungsergebnis von der Zuordnungseinheit unter Nutzung des Telekommunikationsnetzes das Kennzeichen des Kommunikationsendgerätes ermittelt und danach die Zuordnung vorgenommen wird. Dadurch kann vorteilhafterweise sichergestellt werden, dass lediglich dann eine Zuordnung zwischen der Kennung und dem Kennzeichen vorgenommen wird, wenn bei dem Kommunikationsendgerät sowohl die Kennung als auch das Sicherheitsmerkmal vorliegen. Es wird vorteilhafterweise unterbunden, dass ein Kommunikationsendgerät, welches unberechtigterweise eine Kennung erhalten hat, für diese unberechtigterweise eine Zuordnung von der Zuordnungseinheit erstellen lassen kann, sofern dieses Kommunikationsendgerät nicht über das Sicherheitsmerkmal verfügt.

Die erfindungsgemäßen Verfahren können auch so ausgestaltet sein, dass die Kennung und das Sicherheitsmerkmal zu dem Kommunikationsendgerät übertragen werden, indem die Kennung und das Sicherheitsmerkmal zu einem Kennungs-Herausgeber übertragen werden, von einem Erwerber die Kennung und das Sicherheitsmerkmal von dem Kennungs-Herausgeber angefordert werden, und von dem Erwerber die Kennung und das Sicherheitsmerkmal an das Kommunikationsendgerät übertragen werden. Hierbei ist insbesondere vorteilhaft, dass der Erwerber der Kennung keinen direkten Zugriff auf das Kommunikationsendgerät zu haben braucht bzw. nicht mit einem Nutzer des Kommunikationsendgerätes identisch zu sein braucht. Vielmehr kann der Erwerber der Kennung die Kennung und das Sicherheitsmerkmal an eine andere Stelle zur Nutzung weitergeben.

Die Verfahren können auch so ablaufen, dass von dem Erwerber eine Zahlungsnachricht über eine Anforderungsgebühr für die Anforderung an den Kennungs-Herausgeber übertragen wird. Hierbei kann vorteilhafterweise von dem Erwerber die Benutzung der Kennung dem Kennungs-Herausgeber vergütet werden, auch wenn der Erwerber die Kennung nicht selbst nutzt, sondern diese an eine andere Stelle weitergibt.

Die erfindungsgemäßen Verfahren können so ausgestaltet sein, dass als Kennzeichen des Kommunikationsendgerätes eine Rufnummer des Kommunikationsendgerätes verwendet wird, welche mit der Zuordnungsnachricht an die Zuordnungseinheit übertragen wird. Vorteilhafterweise wird hierbei als Kennzeichen die sowieso in den Telekommunikationsnetzen verwendete Rufnummer des Kommunikationsendgerätes verwendet und es muss kein neues Kennzeichen des Kommunikationsendgerätes für die erfindungsgemäßen Verfahren geschaffen werden.

Die Verfahren können auch so ausgestaltet sein, dass als Kennzeichen des Kommunikationsendgerätes ein international einmaliges Teilnehmerkennzeichen des Kommunikationsendgerätes verwendet wird, welches von einem Heimatregister des Telekommunikationsnetzes übertragen wird. Hierbei ist insbesondere vorteilhaft, dass das international einmalige Teilnehmerkennzeichen auch über Telekommunikationsnetzgrenzen hinweg eindeutig dem Kommunikationsendgerät zuordenbar ist.

Die erfindungsgemäßen Verfahren können auch so ausgestaltet ein, dass als Sicherheitsmerkmal eine öffentlich unzugängliche Zeichenkette verwendet wird.

Zur weiteren Erläuterung der Erfindung ist in
- Figur 1: eine schematische Darstellung eines Ausführungsbeispiels eines Verfahrens zur anonymisierten Kommunikation und zur Adressierung eines anonymisierten Kommunikationsendgerätes, in
- Figur 2: eine schematische Darstellung eines Ausführungsbeispiels eines weiteren Verfahrens zur Adressierung eines anonymisierten Kommunikationsendgerätes und in
- Figur 3: eine schematische Darstellung eines Ausführungsbeispieles einer Zuordnungseinheit
dargestellt.

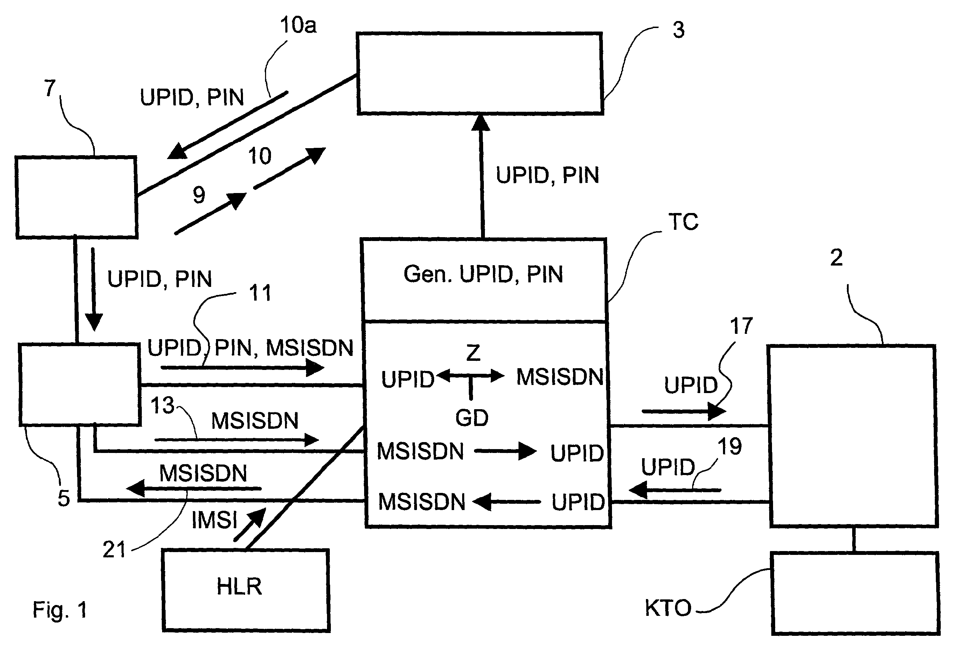

In der Figur 1 ist im mittleren Teil eine Zuordnungseinheit TC in Form eines sogenannten Trust Centers dargestellt. Von dieser Zuordnungseinheit TC wird eine anonyme Kennung UPID (unabhängige persönliche ID-Nummer = UPID) und ein zu dieser anonymen Kennung UPID zugehöriges Sicherheitsmerkmal PIN erstellt. Als Kennung kann beispielsweise eine mehrstellige Zeichenfolge (z.B. eine 15-stellige Zahl oder eine 10-stellige Aneinanderreihung von Buchstaben und Zahlen) verwendet werden. Als Sicherheitsmerkmal PIN kann eine Persönliche Identifikations-Nummer ähnlich der im Bankbereich bekannten vierstelligen Zahlen verwendet werden.

Bei der Kennung handelt es sich um eine "anonyme" Kennung, da diese Kennung keine charakteristischen Merkmale (wie beispielsweise Name, Adresse, Geburtsdatum oder Firma) einer natürlichen oder juristischen Person oder des Kommunikationsendgerätes (wie beispielsweise eine Gerätenummer) enthält; aus der Kenntnis dieser Kennung können keine Rückschlüsse auf einen Nutzer der Kennung gezogen werden.

Bei der Erstellung der Kennung UPID und des Sicherheitsmerkmals PIN kann ein der Kennung UPID zugeordnetes Konto erzeugt werden. Dieses Konto, welches als "Inhaberinformation" lediglich die Kennung UPID aufweist, kann in der Zuordnungseinheit TC, im Telekommunikationsnetz oder - wenn zu diesem Zeitpunkt bereits feststeht, für welchen Leistungserbringer die Kennung UPID erstellt wird - bei genau diesem Leistungserbringer eingerichtet werden. In diesem Ausführungsbeispiel soll der zuletzt genannte Fall dargestellt werden und das Konto KTO wird bei einem weiter unten näher beschriebenen Leistungserbringer in Form eines Fahrscheinservers 2 eingerichtet.

Die Kennung UPID und das zugehörige Sicherheitsmerkmal PIN werden von der Zuordnungseinheit TC zu einem Kennungsherausgeber 3 übertragen. Herausgeber einer Kennung kann jede Einrichtung oder Institution sein, die Interesse an einer anonymisierten Kommunikation mit Kommunikationsgeräten, an einer anonymisierten Identifikation oder Adressierung hat, da sie bei ihrem Betrieb z.B. eine derartige Identifizierung von Kommunikationsendgeräten von Telekommunikationsnetzen benötigt. Dies kann beispielsweise dann der Fall sein, wenn der Kennungsherausgeber 3 eine Leistung für ein Telekommunikationsendgerät bzw. für einen Nutzer des Telekommunikationsendgerätes erbringt und dem Kommunikationsendgerät diese Leistungserbringung in Rechnung stellen will. In dem hier beschriebenen Ausführungsbeispiel soll es sich bei dem Herausgeber 3 der Kennung um ein Verkehrsunternehmen handeln, welches einem Nutzer eines Kommunikationsendgerätes 5 eine Berechtigung zum Nutzen von Transportleistungen verschafft und diese Leistung dem Kommunikationsendgerät 5 in Rechnung stellt.

Die Kennung UPID und das Sicherheitsmerkmal PIN werden von einem Erwerber 7 von dem Kennungsherausgeber 3 angefordert, da der Erwerber 7 eine Berechtigung zur Nutzung von Transportleistungen für den eigenen Gebrauch oder für weitere Stellen erwerben möchte. Für diese Anforderung zahlt der Erwerber 7 eine Zahlungsnachricht 9 über eine Anforderungsgebühr an den Kennungsherausgeber 3; diese Anforderungsgebühr kann beispielsweise eine pauschale Abgeltung für die Nutzung der Kennung UPID und des Sicherheitsmerkmals PIN darstellen. Die Anforderung der Kennung und des Sicherheitsmerkmals kann beispielsweise durch Senden einer Anforderungsnachricht 10 von dem Erwerber 7 zu dem Kennungsherausgeber 3 durchgeführt werden, woraufhin der Kennungsherausgeber 3 mit einer Anforderungserwiderungsnachricht 10a die Kennung UPID und das Sicherheitsmerkmal PIN (beispielsweise in verschlüsselter Form) zu dem Erwerber 7 überträgt. Der Erwerber 7 kann nun die Kennung und das Sicherheitsmerkmal selbst nutzen oder er kann - wie in diesem Ausführungsbeispiel dargestellt - die Kennung und das Sicherheitsmerkmal zu dem Kommunikationsendgerät 5 (bzw. dem Nutzer des Kommunikationsendgerätes 5) übertragen.

Der Zuordnungseinheit TC wird nun bekanntgegeben, dass genau dieses Kommunikationsendgerät 5 die Kennung UPID nutzen möchten. Dazu wird ein Anmeldevorgang des Kommunikationsendgerätes 5 bei dem Trust Center TC durchgeführt. Zu diesem Zwecke wird vom Kommunikationsendgerät 5 eine Zuordnungsnachricht 11, welche die Kennung UPID und das Sicherheitsmerkmal PIN enthält, zu dem Trust Center TC übertragen. Zusätzlich enthält die Zuordnungsnachricht 11 auch ein Kennzeichen MSISDN des Kommunikationsendgerätes 5. Bei diesem Kennzeichen handelt es sich in diesem Ausführungsbeispiel um eine Rufnummer (MSISDN = Mobile Station ISDN Number) des Kommunikationsendgerätes 5. Es handelt sich also um eine netzinterne, nicht oder nur schwer fälsch- oder veränderbare Nummer eines Telekommunikationsnetzes, welche dem Kommunikationsendgerät 5 zugeordnet ist.

Nach Erhalt der Zuordnungsnachricht 11 wird von der Zuordnungseinheit TC überprüft, ob das mit der Zuordnungsnachricht 11 übertragene Sicherheitsmerkmal PIN zu der mit der Zuordnungsnachricht 11 übertragenen Kennung UPID zugehörig ist. Diese Überprüfung kann die Zuordnungseinheit TC durchführen, da sie - wie oben dargestellt - die Kennung UPID und das Sicherheitsmerkmal PIN erstellt hat und Informationen über die erstellte Kennung und das erstellte Sicherheitsmerkmal in der Zuordnungseinheit TC gespeichert sind. Diese Überprüfung stellt eine Sicherheitsfunktion dar, weil während der Erstellung und der gesamten Übertragung das Sicherheitsmerkmal PIN vor Bekanntwerden geschützt wurde (beispielsweise durch eine Verschlüsselung) und dadurch nur ein berechtigter Erwerber bzw. Nutzer Kenntnis von dem jeweils gültigen Sicherheitsmerkmal PIN haben kann.

Zeigt die Prüfung der PIN ein positives Ergebnis, das heißt, stellt sich heraus, dass die mit der Zuordnungsnachricht 11 übertragene PIN tatsächlich die gemeinsam mit der Kennung UPID erstellte PIN ist, so wird von der Zuordnungseinheit TC eine Zuordnung Z der Kennung UPID zu dem Kennzeichen MSISDN des Kommunikationsendgerätes durchgeführt. Diese Zuordnung Z oder "Verknüpfung" Z der Kennung UPID und des Kennzeichens MSISDN wird auch als "Mapping" bezeichnet. Die Zuordnung Z wird beispielsweise in Form eines Datensatzes in einer Datenbank der Zuordnungseinheit TC gespeichert. Diese Zuordnung Z ist im Allgemeinen nur der Zuordnungseinheit TC bekannt. Auf dieser "Geheimhaltung" der Zuordnung basiert die später durchzuführende anonymisierte Identifikation des Kommunikationsendgerätes 5, bei der verhindert wird, dass individuelle oder charakteristische Daten des Kommunikationsendgerätes 5 bzw. des Nutzers des Kommunikationsendgerätes 5 bekannt werden.

Der Zuordnung Z wird von der Zuordnungseinheit TC eine Gültigkeitsdauer GD zugeordnet. Bei dieser Gültigkeitsdauer handelt es sich beispielsweise um eine Zeitspanne, während derer die Kennung UPID für das Kommunikationsendgerät 5 genutzt werden kann. Diese Gültigkeitsdauer kann beispielsweise die Form "10 Tage nach Anmeldung", "bis zum 31.12.2005" oder "bis auf Widerruf" haben.

Für die Zuordnung Z kann anstelle der Rufnummer MSISDN beispielsweise auch ein international einmaliges Teilnehmerkennzeichen IMSI (IMSI = International Mobile Subscriber Identity) verwendet werden, welches von der Zuordnungseinheit TC unter Benutzung der Rufnummer MSISDN des Kommunikationsendgerätes 5 aus einem Heimatregister HLR (welches Daten des Kommunikationsendgerätes 5 verwaltet) abgefragt wird. Das Teilnehmerkennzeichen IMSI wird nur einmal für ein Kommunikationsendgerät vergeben und ermöglicht auch international innerhalb verschiedener Telekommunikationsnetze eine eindeutige und zuverlässige Erkennung des Kommunikationsendgerätes. Durch Nutzung des Teilnehmerkennzeichens IMSI für die Zuordnung Z kann eine besonders hohe Sicherheit erreicht werden, da das Teilnehmerkennzeichen IMSI bei der Übertragung verschlüsselt wird und daher besonders fälschungssicher ist.

Die Aussage, dass das Teilnehmerkennzeichen IMSI oder die Rufnummer MSISDN in einer eindeutigen Weise ein Kommunikationsendgerät kennzeichnet, ist so zu verstehen, dass diese Kennzeichnung für ein in Betrieb befindliches Kommunikationsendgerät, welches an dem erfindungsgemäßen Verfahren teilnimmt, eindeutig ist. Im Detail betrachtet, ist das Teilnehmerkennzeichen IMSI bzw. die Rufnummer MSISDN zwar nicht in einer Hardware eines Kommunikationsendgerätes (fest verdrahtet) gespeichert, sondern Informationen über das Teilnehmerkennzeichen und die Rufnummer werden im Allgemeinen mit Hilfe einer sogenannten SIM-Karte (SIM = Subscriber Identity Module) mit dem Kommunikationsendgerät 5 verbunden, indem die SIM-Karte in einen Kartenschacht des Kommunikationsendgerätes 5 eingeschoben wird. Dies wird im Allgemeinen deshalb praktiziert, da es sonst nicht möglich wäre, z.B. bei Kauf eines neuen Kommunikationsendgerätes seine gewohnte Rufnummer weiter zu verwenden. Da jedoch während des beschriebenen Verfahrens zum Betrieb des Kommunikationsendgerätes eine derartige SIM-Karte mit dem Kommunikationsendgerät 5 verbunden ist, ist bei der Durchführung des Verfahrens tatsächlich die Rufnummer MSISDN oder das Teilnehmerkennzeichen IMSI genau für das Kommunikationsendgerät 5 eindeutig.

Von dem Kommunikationsendgerät 5 soll nun eine Transportberechtigung (z.B. Fahrschein) des Kennungsherausgebers 3 (Verkehrsunternehmen) erworben werden. Dazu sendet das Kommunikationsendgerät 5 eine Ziel-Nachricht 13 an ein Ziel-Kommunikationsendgerät 2 in Form des Fahrscheinservers 2 des Verkehrsunternehmens. Dass der Fahrscheinserver 2 von dem Verkehrsunternehmen, also von dem Kennungsherausgeber 3, betrieben wird, ist nur beispielhaft zu verstehen. Es ist ebenso möglich, dass ein Leistungserbringer-Server, der ähnlich wie der Fahrscheinserver 2 arbeitet, unabhängig von dem Kennungsherausgeber 3 betrieben wird. Die Zielnachricht 13 enthält die Information, dass der Absender dieser Zielnachricht beispielsweise einen Fahrschein gültig am 31.08.2001 für die Fahrstrecke Berlin-Hamburg für den Zug IC 1713 erwerben möchte. Als Absenderangabe (Absenderinformation) enthält die von dem Kommunikationsendgerät 5 ausgesandte Zielnachricht 13 das Kennzeichen, also hier die Rufnummer MSISDN des Kommunikationsendgerätes 5. Als Zielinformation ist in der Zielnachricht 13 der Fahrscheinserver 2 angegeben. Dies kann beispielsweise so realisiert sein, dass dem Fahrscheinserver 2 eine Server-Servicenummer (das heißt eine spezielle Telefonnummer) zugeordnet ist, die am Kommunikationsendgerät 5 beim Absenden der Zielnachricht 13 eingegeben wird. In dem Telekommunikationsnetz, mit dem das Kommunikationsendgerät 5 verbunden ist, sind Vermittlungsstellen (Switches) so eingerichtet, dass sie anhand der Server-Servicenummer die Zielnachricht 13 erkennen und diese Zielnachricht zunächst zu der Zuordnungseinheit TC leiten. Dabei kann anhand verschiedener Server-Servicenummern die Zielnachricht zu verschiedenen Zuordnungseinheiten geleitet werden. Nach Eintreffen der Zielnachricht 13 bei der Zuordnungseinheit TC ersetzt die Zuordnungseinheit in der Zielnachricht 13 das als Absenderinformation dienende Kennzeichen MSISDN mit Hilfe der Zuordnung Z durch die Kennung UPID.

Die derart veränderte (anonymisierte) Zielnachricht 17 wird danach von der Zuordnungseinheit TC unter Nutzung des Telekommunikationsnetzes zu dem Fahrscheinserver 2 weitergeleitet. Der Fahrscheinserver 2 erkennt aufgrund der anonymisierten Zielnachricht 17, was für eine Transportberechtigung (Fahrschein) von dem Kommunikationsendgerät 5 benötigt wird. Jedoch erkennt der Fahrscheinserver 2 als Absender der anonymisierten Nachricht 17 lediglich die Kennung UPID, die für den Server keine Rückschlüsse auf das Kommunikationsendgerät 5 oder dessen Nutzer zulässt.

Der Fahrscheinserver 2 ermittelt nun das der Kennung UPID zugehörige Konto KTO und belastet dieses Konto KTO mit der für die Fahrberechtigung zu zahlenden Zahlungssumme. Durch Belastung des Kontos KTO mit dieser Zahlungssumme gerät das Konto in den Soll-Bereich, es entsteht ein "negativer Kontostand". In einem zwischen dem Kommunikationsendgerät 5 (bzw. dessen Nutzer) und dem Kennungsherausgeber 3 (Verkehrsunternehmen) geschlossenen Vertrag kann festgelegt sein, innerhalb welcher Zahlungsfrist von Seiten des Kommunikationsendgerätes 5 auf das Konto KTO eine der Zahlungssumme entsprechende Summe eingezahlt werden muss, um das Konto auszugleichen.

Das Konto KTO kann auch als Guthabenkonto ausgestaltet sein, so dass schon vor der Absendung der Zielnachricht 13 von Seiten des Kommunikationsendgerätes 5 ein entsprechendes Guthaben auf dem Konto KTO unter Angabe der Kennung UPID eingezahlt werden muss.

Bei Erhalt der anonymisierten Zielnachricht 17 wird dem Zielkommunikationsendgerät 2 die Kennung UPID bekannt. Dadurch kann das Zielkommunikationsendgerät 2 eine Identifikation des Kommunikationsendgerätes 5 vornehmen und aufgrund dieser Identifikation beispielsweise dem Kommunikationsendgerät 5 erbrachte Leistungen in Rechnung stellen. Jedoch kann auf Seiten des Zielkommunikationsendgerätes 2 anhand der anonymen Kennung keine Rückschlüsse auf das Kommunikationsendgerät 5 bzw. dessen Betreiber getätigt werden. Dadurch ist eine anonyme Kommunikation mit dem Kommunikationsendgerät 5 möglich.

Sobald die Zahlungssumme auf dem Konto KTO verbucht ist, sendet der Fahrscheinserver 2, der jetzt als Ruf-Kommunikationsgerät arbeitet, mit einer Rufnachricht 19 eine "elektronische" Fahrkarte in Form eines Datensatzes an das Kommunikationsendgerät 5, wobei der das Verfahren zur Adressierung des anonymisierten Kommunikationsendgerätes 5 nutzt. Zu diesem Zwecke erhält die Rufnachricht 19 von dem Fahrscheinserver 2 als Adressinformation die Kennung UPID und wird aufgrund dieser Kennung von Vermittlungsstellen des Kommunikationsnetzes zunächst zu der Zuordnungseinheit TC geleitet. Die Zuordnungseinheit TC ersetzt nun unter Nutzung der Zuordnung Z die Kennung UPID durch das Kennzeichen MSISDN und aufgrund der derart veränderten Adressinformation wird eine veränderte Rufnachricht 21 von der Zuordnungseinheit TC zu dem Kommunikationsendgerät 5 weitergesendet.

Der elektronische Fahrschein kann dann beispielsweise in dem Kommunikationsendgerät 5 gespeichert werden. Bei einer Fahrscheinkontrolle können Fahrscheindaten auf einer Anzeige des Kommunikationsendgerätes 5 ausgegeben werden oder diese Fahrscheindaten können von dem Kommunikationsendgerät 5 zu einem Fahrscheinkontrollgerät (welches in der Figur nicht dargestellt ist) zur Kontrolle übertragen werden.

Die Ersetzung des Kennzeichens durch die Kennung oder der Kennung durch das Kennzeichen, welche die Zuordnungseinheit TC durchführt, erfolgt bei der Signalisierung eines Rufaufbaus. Die Zielnachricht 13, die veränderte (anonymisierte) Zielnachricht 17, die Rufnachricht 19 und die veränderte Rufnachricht 21 sind Signalisierungsnachrichten, die beispielsweise von dem sogenannten Signalisierungssystem Nr. 7 (SS#7 = Signalling System No. 7) genutzt werden.

Das erfindungsgemäße Verfahren kann vorzugsweise in Telekommunikationsnetzen angewandt werden, welche eine Struktur eines sogenannten Intelligenten Netzes IN (IN = Intelligent Network) aufweisen. Dabei können die oben erwähnten, in der Figur nicht dargestellten Vermittlungsstellen des Telekommunikationsnetzes durch sogenannte Dienstevermittlungspunkte (Service Switching Point = SSP) realisiert sein. Die Zuordnungseinheit TC kann beispielsweise von einem Dienstesteuerungspunkt (Service Control Point SCP) gebildet sein.

Bei dem erfindungsgemäßen Verfahren ist von besonderem Vorteil, dass ein Nutzer eines Kommunikationsendgerätes eine Kommunikation mit einem Kommunikationspartner aufbauen kann, ohne dass der Nutzer des Kommunikationsendgerätes seine wahre Identität (Name, Adresse, Telefonnummer usw.) dem Kommunikationspartner preisgeben muss. Dies ist insbesondere dann vorteilhaft, wenn ein Nutzer des Kommunikationsendgerätes 5 Leistungen von einem Leistungsanbieter in Anspruch nehmen möchte, zugleich aber verhindern möchte, dass der Leistungsanbieter in einer kommunikationsendgerätebezogenen oder nutzerbezogenen Datenbank Daten über beispielsweise die Art der gewünschten Leistungen sammelt und diese Daten beispielsweise an Dritte weiterverkauft. Aus Sicht des Leistungsanbieters, hier also des Verkehrsunternehmens, ist insbesondere vorteilhaft, dass der Leistungsanbieter die Möglichkeit erhält, die erbrachte Leistung über beispielsweise ein Konto abzurechnen und von dem Kommunikationsendgeräteinhaber oder auch dem Erwerber der Kennung UPID bezahlen zu lassen, ohne den Namen, die Adresse, das Kennzeichen MSISDN oder ähnliche persönliche Angaben des Kommunikationsendgerätenutzers zu benötigen.

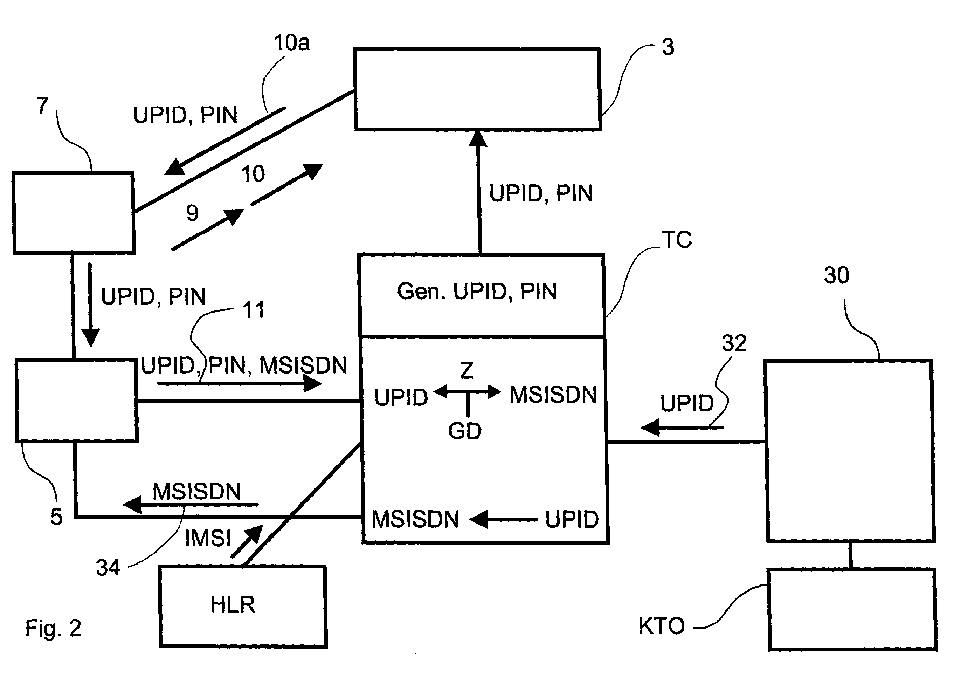

In der Figur 2 ist beispielhaft dargestellt, wie das anonymisierte Kommunikationsendgerät 5 (anonym) adressiert wird. Der obere Teil der Figur 2 entspricht dabei dem oberen Teil der Figur 1; auch der Verfahrensablauf bei der Erstellung und Übertragung der Kennung und des Kennzeichens zu dem Kommunikationsendgerät 5 sowie bei der Anmeldung mittels der Zuordnungsnachricht 11 und der Erstellung der Zuordnung Z in der Zuordnungseinheit TC ist ähnlich dem im Zusammenhang mit der Figur 1 beschriebenen Verfahrensablauf. Im Unterschied zu der Figur 1 wird jedoch von dem Kommunikationsendgerät 5 keine Zielnachricht zu einem Fahrscheinserver gesendet, sondern in der rechten Seite der Figur 2 ist ein Ruf-Kommunikationsendgerät 30 in Form eines Informationsanbieters 30 (also in Form eines Leistungsanbieters) dargestellt. Bei diesem Informationsanbieter 30 hat das Kommunikationsendgerät 5 auf eine beliebige Art und Weise beispielsweise einen Informationsdienst, der in der Lieferung von Börsenkursen besteht, bestellt. Bei dieser Bestellung hat das Kommunikationsendgerät 5 jedoch nur die Kennung UPID angegeben, nicht jedoch sein Kennzeichen MSISDN. Der Informationsanbieter 30 erstellt nun beispielsweise täglich (tägliches Abonnement) eine Börseninformationsnachricht 32, welche eine Rufnachricht 32 darstellt, mit den gewünschten Börsenkursen, bucht eine vorher mit dem Kommunikationsendgerät 5 vereinbarte Zahlungssumme von dem der Kennung UPID zugeordneten Konto KTO ab, adressiert nach erfolgreicher Abbuchung die Börseninformationsnachricht 32 mit der Kennung UPID und versendet die Börseninformationsnachricht. Aufgrund der als Adressinformation dienenden Kennung UPID wird die Börseninformationsnachricht 32 von nicht dargestellten Vermittlungsstellen des Telekommunikationsnetzes zunächst einmal zu der Zuordnungseinheit TC geleitet. Von der Zuordnungseinheit TC wird daraufhin unter Benutzung der Zuordnung Z die Kennung UPID durch das Kennzeichen MSISDN des Kommunikationsendgerätes 5 ersetzt und die derart veränderte Börseninformationsnachricht 34, welche eine veränderte Rufnachricht 34 darstellt, wird daraufhin von der Zuordnungseinheit TC zu dem Kommunikationsendgerät 5 übertragen. Bei Empfang der (veränderten) Börseninformationsnachricht 34 liegen die gewünschten Börsenkurse bei dem Kommunikationsendgerät 5 vor.

Dieser Vorgang wiederholt sich in entsprechender Art und Weise bei jeder neuen Zusendung von Börsenkursen durch den Informationsanbieter 30.

Das bei dem Fahrscheinserver 2 oder dem Informationsanbieter 30 angeordnete Konto KTO ist nur beispielhaft zu verstehen. Als ein zur Abrechnung geeignetes Konto kann auch ein in dem Telekommunikationsnetz sowieso zur Abrechnung von Telekommunikationsdiensten vorhandenes "Teilnehmer-Konto" (nicht in den Figuren dargestellt) verwendet werden, wobei es sich um ein vorausbezahltes Teilnehmer-Konto ("Prepaid-Konto") oder um ein Teilnehmer-Konto mit nachträglichem Kontoausgleich ("Postpaid-Konto") handeln kann. In diesem Fall sendet z.B. der Fahrscheinserver 2 zur Belastung des Teilnehmer-Kontos eine Belastungsnachricht an einen das Teilnehmer-Konto verwaltenden "Payment-Server" des Telekommunikationsnetzes und fügt dieser Belastungsnachricht die Kennung UPID bei. Die Belastungsnachricht wird zunächst zu der Zuordnungseinheit TC geleitet, die Zuordnungseinheit TC ersetzt in bekannter Weise die Kennung durch das Kennzeichen MSISDN, und die derart veränderte Belastungsnachricht wird zu dem Payment-Server weitergeleitet. (Wenn dem Teilnehmer-Konto ähnlich dem Konto KTO die Kennung UPID zugeordnet ist, dann ist nicht einmal eine Ersetzung der Kennung durch das Kennzeichen notwendig, und die Belastungsnachricht kann unverändert von der Zuordnungseinheit TC zu dem Payment-Server geleitet werden.) Der Payment-Server bestätigt eine erfolgreiche Buchung mit einer Quittungsnachricht, die vom Payment-Server wieder über die Zuordnungseinheit TC an den Absender der Belastungsnachricht (hier den Fahrscheinserver 2) gesendet wird. Nach Erhalt der Quittungsnachricht sendet der Fahrscheinserver 2 wie bekannt mit der Rufnachricht 19 den Fahrschein-Datensatz an das Kommunikationsendgerät 5.

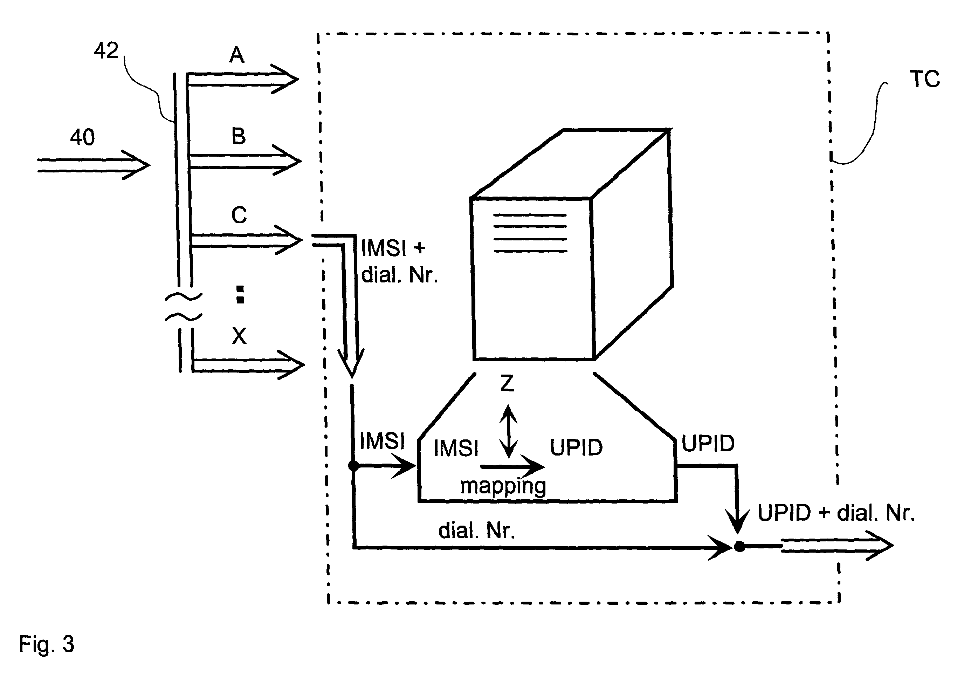

Mit Hilfe der Figur 3 soll nun ein weiteres Ausführungsbeispiel des Verfahrensablaufes in der Zuordnungseinheit TC dargestellt werden. Im linken Teil der Figur 3 erreicht ein ankommender Ruf 40 in Form einer Signalisierungsnachricht 40 (als Pfeil symbolisiert) eine Selektionseinrichtung 42. Der ankommende Ruf 40 stammt von einem Kommunikationsendgerät (beispielsweise von dem Kommunikationsendgerät 5 der Figur 1) und enthält als Adressinformation eine an dem Kommunikationsendgerät gewählte Rufnummer. Bei der Selektionseinrichtung 42 kann es sich beispielsweise um eine Vermittlungsstelle des Telekommunikationsnetzes handeln, in der anhand der Adressinformation (der gewählten Rufnummer) festgestellt wird, dass der ankommende Ruf zu dem Trust Center TC geleitet werden soll. Die Selektionseinrichtung 42 leitet daraufhin den ankommenden Ruf zu dem Trust Center TC (Pfeil C). Pfeile A und B der Selektionseinrichtung 42 symbolisieren den Weg, auf dem andere ankommende Rufe beispielsweise zu anderen Trust Centern geleitet werden. Welches Trust Center für den jeweiligen Ruf zuständig ist, wird anhand der gewählten Rufnummer entschieden; beispielsweise können innerhalb aller möglicher Rufnummern sogenannte Nummernkreise den einzelnen Trust Centern zugeordnet sein. Ein weiterer Weg, auf dem ankommende Nachrichten von der Selektionseinrichtung 42 weitergeleitet werden können, ist der durch einen Pfeil X symbolisierte Weg. Über diesen Weg können ankommende Rufe beispielsweise direkt zu dem gerufenen Kommunikationsendgerät geleitet werden, wenn eine Auswertung der gewählten Rufnummer ergibt, dass die entsprechenden Rufe nicht anonymisiert werden sollen, sondern dass diese vielmehr als nichtanonymisierte Rufe direkt zu einem Telefon weitergeschaltet werden sollen.

In diesem Ausführungsbeispiel jedoch gelangt der ankommende Ruf 40 über die Selektionseinrichtung 42 zu dem Trust Center TC. Im Trust Center wird aus dem ankommenden Ruf das Kennzeichen (hier das internationale einmalige Teilnehmerkennzeichen IMSI) extrahiert, aufgrund der im Trust Center TC gespeicherten Zuordnung Z wird dieses Kennzeichen durch die Kennung UPID ersetzt und der Ruf als abgehender Ruf (der die gewählte Rufnummer und die Kennung UPID enthält) zu der der gewählten Rufnummer zugehörigen Einrichtung geleitet. Eine derartige Einrichtung kann beispielsweise der in der Figur 1 dargestellte Fahrscheinserver 2 oder der in der Figur 2 dargestellte Informationsanbieter 30 sein.

Wenn, wie im Zusammenhang mit der Figur 3 dargestellt, das Teilnehmerkennzeichen IMSI als Kennzeichen genutzt wird, ist folgende Erweiterung des erfindungsgemäßen Verfahren möglich: Aus Sicherheitsgründen ist es wünschenswert, das international einmalige Teilnehmerkennzeichen IMSI nur innerhalb des Telekommunikationsnetzes netzintern zu verwenden und nicht außerhalb des Telekommunikationsnetzes zugänglich zu machen. Um das Trust Center TC jedoch außerhalb des Telekommunikationsnetzes anordnen zu können (denn es ist oftmals wünschenswert, dass das Trust Center eine sowohl von dem Leistungsanbieter als auch von dem Telekommunikationsnetz unabhängige Einrichtung (ein sogenanntes externes Trust Center) darstellt, kann eine doppelte Ersetzung angewendet werden: Im Telekommunikationsnetz findet eine Zuordnung von dem Kennzeichen IMSI zu einer Zwischen-ID statt. Diese Zwischen-ID lässt keinen Rückschluss auf das Kommunikationsendgerät 5 bzw. den Nutzer des Kommunikationsendgerätes (den Telekommunikationsnetzkunden) zu. Lediglich die Zwischen-ID und nicht das Kennzeichen IMSI wird an das außerhalb des Telekommunikationsnetzes befindliche externe Trust Center gegeben und in diesem Trust Center findet eine Zuordnung der Zwischen-ID zu der Kennung UPID analog zu dem bisher beschriebenen Verfahren statt. Bei Nachrichtenflüssen in Richtung des Kommunikationsendgerätes finden ebenso zwei Zuordnungen und Ersetzungen statt: Zum Ersten wird die als Adressinformation dienende UPID in dem externen Trust Center durch eine Zwischen-ID ersetzt, die Zwischen-ID wird in das Telekommunikationsnetz übertragen und innerhalb des Kommunikationsnetzes durch das Kennzeichen (IMSI oder MSISDN) ersetzt.

Bei den beschriebenen Verfahren kann von dem Kennungsherausgeber 3 die Kennung UPID in einem maschinenlesbaren Medium (z.B. "Transponder-Karte", Barcodeaufkleber o.ä.) abgespeichert vergeben werden. Die Kennung UPID kann dann bei Bedarf direkt aus dem maschinenlesbaren Medium ausgelesen werden, sofern geeignete Lesegeräte (z.B. Scanner) beispielsweise mit dem Kommunikationsendgerät in Kontakt gebracht werden. Dadurch kann die Kennung UPID in einer bequemen Art und Weise in das Kommunikationsendgerät eingegeben werden.

Maschinenlesbare Medien und Lesegeräte können auch z.B. dann vorteilhaft eingesetzt werden, wenn ein im öffentlichen Personenverkehr eingesetztes Kontrollgerät Kenntnis aller aktuell gültigen und der Kennung UPID zugeordneten Fahrberechtigungen hat. Wenn die Kennung UPID des Fahrscheinbesitzers maschinell von den Lesegeräten in das Kontrollgerät eingelesen wird, können von diesem die Fahrtberechtigungen sehr schnell und zuverlässig kontrolliert werden.

Eine Erweiterung des erfindungsgemäßen Verfahrens lässt sich wie folgt realisieren:
Bei der Anforderung der Kennung UPID und der PIN von dem Kennungsherausgeber 3 durch den Erwerber 7 kann beispielsweise vertraglich vereinbart werden, innerhalb welcher Frist ein auf dem Konto KTO gebuchter Zahlbetrag auf diesem Konto eingezahlt werden muss, um einen Kontoausgleich zu erreichen. Wenn diese (nachträgliche) Bezahlung rechtzeitig erfolgt, so bleibt das Kommunikationsendgerät 5 bzw. dessen Nutzer anonym, da beispielsweise der Fahrscheinserver der Figur 1 lediglich die UPID erfährt. Wird jedoch der Kontoausgleich nicht rechtzeitig innerhalb der Frist vorgenommen, so ermächtigt eine Vertragsklausel (der der Erwerber zugestimmt hat) den Betreiber des Trust Centers, auf Anforderung des Leistungsanbieters (beispielsweise des Fahrscheinservers) dem Fahrscheinserver die Identität des Erwerbers offenzulegen. Damit ist der Fahrscheinserver in der Lage, seine Ansprüche gegenüber dem Kommunikationsendgerätebetreiber geltend zu machen. Eine derartige Offenlegung der Identität des Kommunikationsendgerätes 5 kann beispielsweise derart erfolgen, dass von dem Fahrscheinserver 2 eine Identitätsanforderung an das Trust Center TC übertragen wird, mit dieser Identitätsanforderung die Kennung UPID mitgesandt wird, aufgrund der Kennung UPID von dem Trust Center TC das Kennzeichen MSISDN ermittelt wird, von dem Trust Center eine weitere Identitätsanforderungsnachricht, welche das Kennzeichen MSISDN enthält, an das Telekommunikationsnetz gesendet wird, aus einem Datenspeicher (z.B. Heimatregister HLR) des Kommunikationsnetzes die zu der MSISDN gehörenden persönlichen Daten (Name, Adresse, usw.) ausgelesen werden und diese Daten über das Trust Center TC an den Fahrscheinserver 2 übertragen werden.

Um für folgende Fahrscheinkäufe seine Anonymität wiederherzustellen, kann der Besitzer des Kommunikationsendgerätes eine neue Kennung UPID bei dem Kennungsherausgeber abfordern und durch eine erneute Anmeldung bei dem Trust Center diese seinem Kennzeichen (MSISDN oder IMSI) zuordnen lassen.

Der Leistungsanbieter (z.B. Fahrscheinserver 2 oder Informationsanbieter 30) kann das Kommunikationsendgerät 5 über im Zusammenhang mit der Leistungserbringung auftretende Ereignisse informieren. Er kann beispielsweise über den Kontostand des Kontos KTO oder über die Notwendigkeit eines Kontoausgleiches durch Senden einer SMS (SMS = Short Message Service) an das Kommunikationsendgerät 5 informieren. Diese SMS wird ähnlich der Rufnachricht 19 der Figur 1 mit der Kennung UPID adressiert und über die Zuordnungseinheit TC ähnlich der veränderten Rufnachricht 21 der Figur 1 an das Kommunikationsendgerät 5 übermittelt; für die Übermittlung wird also die Funktion der anonymisierten Adressierung verwendet.

Das erfindungsgemäße Verfahren erlaubt auch die Realisierung von gesicherten Zugangssystemen. Dabei identifiziert sich eine Person, die sich Zutritt (beispielsweise zu einem Gebäude) verschaffen möchte, durch ihre Kennung UPID. Dies kann beispielsweise durch manuelle Eingabe der Kennung UPID erfolgen oder aber auch durch Anwendung eines maschinenlesbaren Mediums (beispielsweise eines Transponders). Dies erfolgt bei einem Leistungsanbieter ähnlich dem Fahrscheinserver 2 der Figur 1. Von diesem Leistungsanbieter wird nun eine mit der Kennung UPID adressierte Nachricht an das Trust Center TC gesendet, von diesem wird die Kennung UPID durch das zugeordnete Kennzeichen MSISDN ersetzt, über das zugeordnete Kennzeichen wird das Kommunikationsendgerät 5 des Zugangssuchenden identifiziert und an das Kommunikationsendgerät 5 eine nur kurze Zeit gültige Zugangsnummer gesendet (beispielsweise per SMS oder auch als Sprach-Ruf, bei dem die Zugangsnummer über den Lautsprecher des Kommunikationsendgerätes ausgegeben wird). Durch Eingabe der Zugangsnummer, zum Beispiel an einer Tastatur des Zugangssystems, erhält der Nutzer des Kommunikationsendgerätes den erwünschten Zugang, z.B. zu dem Gebäude. Ebenso ist es möglich, dass die Zugangsnummer in Form einer Tonfolge zu dem Zugangssystem übertragen wird, wobei diese Tonfolge von dem Lautsprecher des Kommunikationsendgerätes 5 in ein Mikrophon des Zugangssystems eingespielt wird.

Das erfindungsgemäße Verfahren kann auch dazu genutzt werden, einem Nutzer des Kommunikationsendgerätes 5 eine (temporäre) Telefonnummer zur Verfügung zu stellen. Diese temporäre Telefonnummer wird durch die UPID gebildet, sie ist nur während der Gültigkeitsdauer GD der Zuordnung Z gültig und kann nur während dieser Zeitspanne von Anruf-Kommunikationsendgeräten (beispielsweise Telefonen) angerufen werden. Ein Anrufer wählt mit seinem Anruf- Kommunikationsendgerät die UPID, daraufhin wird ähnlich der in der Figur 1 dargestellten Rufnachricht 19 und der veränderten Rufnachricht 21 der Ruf zu dem Kommunikationsendgerät 5 geleitet. Sobald die temporäre Telefonnummer nicht mehr benötigt wird oder die Gültigkeitsdauer GD abgelaufen ist, wird die Zuordnung in dem Trust Center gelöscht oder als ungültig gekennzeichnet und das Kommunikationsendgerät 5 ist nicht mehr unter der anonymen Telefonnummer in Form der UPID erreichbar. Ein Anwendungsbeispiel für eine derartige temporäre anonyme Telefonnummer kann beispielsweise in Verbindung mit Zeitungsannoncen auftreten, wobei ein inserierender Kommunikationsendgerätenutzer, z. B. nur für den Verkauf einer Ware, eine temporär gültige, anonyme Telefonnummer wünscht, nach erfolgreichem Verkauf aber nicht mehr durch an diese Telefonnummer gerichtete Rufe belästigt werden möchte.

In der Zuordnungseinheit TC kann die Ersetzung der Kennung durch das Kennzeichen bzw. die Ersetzung des Kennzeichens durch die Kennung auch an bestimmte Voraussetzungen gebunden werden, d.h. es können sogenannte Filterfunktionen eingesetzt werden.
So kann zum Beispiel eine Zugangsberechtigung daran gebunden sein, dass sich das Kommunikationsendgerät in einer bestimmten Funkzelle des Telekommunikationsnetzes befindet. Dadurch wird die Sicherheit erhöht und ein Missbrauch durch einen Kommunikationsendgerätenutzer, welcher sich gar nicht an dem von ihm vorgegebenen Zugangsort befindet, ausgeschlossen werden. Ebenso ist es möglich, dass bei dem Bereitstellen von anonymen Telefonnummern die ankommenden Rufe das Kommunikationsendgerät nur dann erreichen sollen, wenn sich dieses Kommunikationsendgerät in bestimmten Zellen des Kommunikationsnetzes z.B. am Wohnort des Benutzers befindet.

In all diesen Fällen wird die im Trust Center stattfindende Ersetzung ("Mapping") davon abhängig gemacht, ob bei dem jeweils aktuellen Ruf Merkmale erkannt werden, die mit in dem Trustcenter hinterlegten Daten (sogenannten Mustern) übereinstimmen. Nur wenn die aktuell ermittelten Daten (beispielsweise Orts-Informationen des Kommunikationsendgerätes, Zeit-Informationen, Datum) mit den hinterlegten Mustern übereinstimmen, findet ein "Mapping" und beispielsweise eine Rufweiterleitung statt.
Diese Muster können in dem Trust Center vom Telekommunikationskunden (Nutzer des Kommunikationsendgerätes) hinterlegt werden oder sie können vom Kennungsherausgeber festgelegt werden. Die Verwendung derartiger Muster dient z.B. der Erhöhung der Sicherheit gegen Missbrauch, dem Schutz der Privatsphäre des Kommunikationsendgerätnutzers und der Erhöhung der Sicherheit der Identifizierung des Berechtigten.

Die Erfindung läßt sich sowohl in Mobilfunknetzen (wie in den Ausführungsbeispielen dargestellt) als auch in Kommunikations-Festnetzen anwenden, wie beispielsweise in analogen Telekommunikationsnetzen und in ISDN-Netzen (ISDN = Integrated Services Digital Network).

## Patentansprüche

1. Verfahren zur anonymisierten Kommunikation mit einem Kommunikationsendgerät (5) eines Telekommunikationsnetzes, bei dem
- in einer mit dem Telekommunikationsnetz verbundenen Zuordnungseinheit (TC) eine Zuordnung (2) von einem telekommunikationsnetzseitig festgesetzten Kennzeichen (MSISDN, IMSI) des Kommunikationsendgerätes (5) zu einer anonymen Kennung (UPID) vorgenommen wird,
- eine von dem Kommunikationsendgerät (5) zu einem Ziel-Kommunikationsendgerät (2) ausgesandte Zielnachricht (13), welche als Absenderinformation das Kennzeichen (MSISDN, IMSI) enthält, zunächst zu der Zuordnungseinheit (TC) geleitet wird,
- von der Zuordnungseinheit (TC) das Kennzeichen (MSISDN, IMSI) der Zielnachricht (13) durch die Kennung (UPID) ersetzt wird und
- danach die anonymisierte Zielnachricht (17) zu dem Ziel-Kommunikationsendgerät (2) weitergeleitet wird.

2. Verfahren nach Anspruch 1,
**dadurch gekennzeichnet, dass**
- von der Zuordnungseinheit (TC) eine dem Kennzeichen (MSISDN, IMSI) und der Kennung (UPID) zugehörige Gültigkeitsdauer (GD) ermittelt wird, und
- das Ersetzen des Kennzeichens (MSISDN, IMSI) durch die Kennung (UPID) nach Ablauf der Gültigkeitsdauer (GD) unterbunden wird.

3. Verfahren zur Adressierung eines anonymisierten Kommunikationsendgerätes (5) eines Telekommunikationsnetzes, bei dem
- in einer mit dem Telekommunikationsnetz verbundenen Zuordnungseinheit (TC) eine Zuordnung (Z) von einem telekommunikationsnetzseitig festgesetzten Kennzeichen (MSISDN, IMSI) des Kommunikationsendgerätes (5) zu einer anonymen Kennung (UPID) vorgenommen wird,
- eine von einem Ruf-Kommunikationsendgerät (2, 30) zu dem Kommunikationsendgerät (5) ausgesandte Rufnachricht (19, 32), welche als Adressinformation die Kennung (UPID) enthält, zunächst zu der Zuordnungseinheit (TC) geleitet wird,
- von der Zuordnungseinheit (TC) die Kennung (UPID) der Rufnachricht (19, 32) durch das Kennzeichen (MSISDN, IMSI) ersetzt wird, und
- danach die veränderte Rufnachricht (21, 34) zu dem dem Kennzeichen (MSISDN, IMSI) zugehörigen Kommunikationsendgerät (5) weitergeleitet wird.

4. Verfahren nach Anspruch 3,
**dadurch gekennzeichnet, dass**
- von der Zuordnungseinheit (TC) eine dem Kennzeichen (MSISDN, IMSI) und der Kennung (UPID) zugehörige Gültigkeitsdauer (GD) ermittelt wird, und
- das Ersetzen der Kennung (UPID) durch das Kennzeichen (MSISDN, IMSI) nach Ablauf der Gültigkeitsdauer (GD) unterbunden wird.

5. Verfahren nach einem der Ansprüche 1 bis 4,
**dadurch gekennzeichnet, dass**
- vor der Zuordnung von der Zuordnungseinheit (TC) die Kennung (UPID) und ein der Kennung (UPID) zugehöriges Sicherheitsmerkmal (PIN) erstellt werden,
- die Kennung (UPID) und das Sicherheitsmerkmal (PIN) zu dem Kommunikationsendgerät (5) übertragen werden,
- zur Zuordnung (Z) von dem Kommunikationsendgerät (5) eine die Kennung (UPID) und das Sicherheitsmerkmal (PIN) enthaltende Zuordnungsnachricht (11) an die Zuordnungseinheit (TC) übertragen wird,
- von der Zuordnungseinheit (TC) überprüft wird, ob das Sicherheitsmerkmal (PIN) der Kennung (UPID) zugehörig ist,
- bei einem positiven Überprüfungsergebnis von der Zuordnungseinheit (TC) unter Nutzung des Telekommunikationsnetzes das Kennzeichen (MSISDN, IMSI) des Kommunikationsendgerätes (5) ermittelt und danach die Zuordnung (Z) vorgenommen wird.

6. Verfahren nach Anspruch 5,
**dadurch gekennzeichnet, dass**
- die Kennung (UPID) und das Sicherheitsmerkmal (PIN) zu dem Kommunikationsendgerät (5) übertragen werden, indem
- die Kennung (UPID) und das Sicherheitsmerkmal (PIN) zu einem Kennungs-Herausgeber (3) übertragen werden,
- von einem Erwerber (7) die Kennung (UPID) und das Sicherheitsmerkmal (PIN) von dem Kennungs-Herausgeber (3) angefordert werden, und
- von dem Erwerber (7) die Kennung (UPID) und das Sicherheitsmerkmal (PIN) an das Kommunikationsendgerät (5) übertragen werden.

7. Verfahren nach Anspruch 6,
**dadurch gekennzeichnet, dass**
- von dem Erwerber (7) eine Zahlungsnachricht (9) für eine Anforderungsgebühr für die Anforderung an den Kennungs-Herausgeber (3) übertragen wird.

8. Verfahren nach einem der Ansprüche 5 bis 7,
**dadurch gekennzeichnet, dass**
- als Kennzeichen des Kommunikationsendgerätes (5) eine Rufnummer (MSISDN) des Kommunikationsendgerätes (5) verwendet wird, welche mit der Zuordnungsnachricht (11) an die Zuordnungseinheit(TC) übertragen wird.

9. Verfahren nach einem der vorhergehenden Ansprüche,
**dadurch gekennzeichnet, dass**
- als Kennzeichen des Kommunikationsendgerätes (5) ein international einmaliges Teilnehmerkennzeichen (IMSI) des Kommunikationsendgerätes (5) verwendet wird, welches von einem Heimatregister (HLR) des Telekommunikationsnetzes übertragen wird.

10. Verfahren nach einem der vorhergehenden Ansprüche,
**dadurch gekennzeichnet, dass**
- als Sicherheitsmerkmal (PIN) eine öffentlich unzugängliche Zeichenkette (PIN) verwendet wird.
